Europäisches Patentamt

European Patent Office

Office européen des brevets

(11) Publication number: **0 369 578 A2**

# EUROPEAN PATENT APPLICATION

(21) Application number: **89308271.9**

(22) Date of filing: **15.08.89**

(51) Int. Cl.5: **F16F 1/18, B21D 53/88**

(30) Priority: **14.11.88 GB 8826612**

(43) Date of publication of application:
**23.05.90 Bulletin 90/21**

(84) Designated Contracting States:
**DE ES FR IT NL**

(71) Applicant: **JEDMOND ENGINEERS LIMITED**
**197 Bedford Avenue**
**Slough Berkshire SL1 4RX(GB)**

(72) Inventor: **Bowers, Colin Walter**
**10 St Georges Close**
**Toddington Bedfordshire LU5 6AT(GB)**

(74) Representative: **Boutland, John Anthony et al**
**Prudential Buildings Room 24 97-101 Above**
**Bar Street**
**Southampton SO9 4GT Hampshire(GB)**

(54) **Improvements in or relating to the manufacture of leaf springs.**

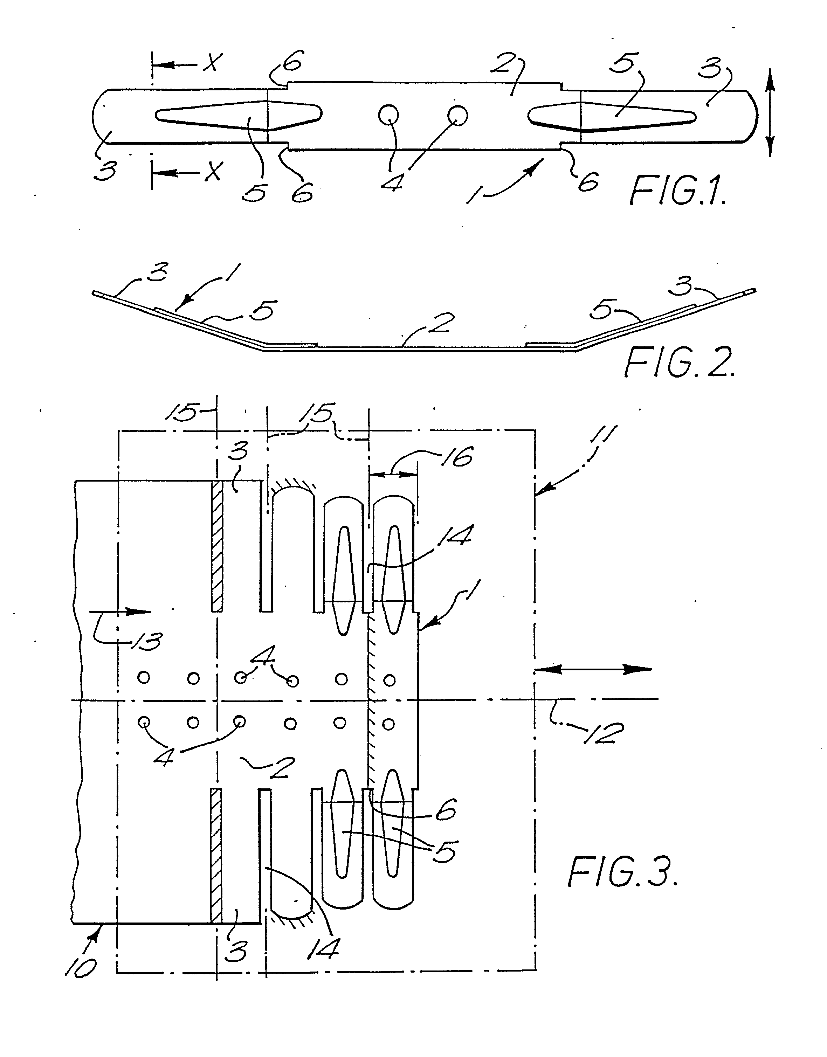

(57) With reference to Figure 3, a method of manufacturing video casette leaf springs comprising the steps of:

a) feeding stainless steel strip material (10) of width substantially corresponding to the intended length of the springs (1) in the direction (13) of the longitudinal axis (12) of the strip (10),

b) forming slots (14) in the strip (10) which extend inwardly towards each other from the edges of the strip and along lateral axes (15) disposed substantially normal to said longitudinal axis (12), and

c) cropping the strip along said lateral axes (15).

Spring locating holes (4) are preferably formed in the strip (10) and the ends of strip material (10) between the slots (14) may be cropped so that they become rounded.

The strip material is deformed (5) so as to strengthen the springs.

FIG.3.

## Improvements in or relating to the Manufacture of Leaf Springs

### BACKGROUND TO THE INVENTION

This invention relates to the manufacture of leaf springs and is particularly concerned with the manufacture of leaf springs for supporting the reels of video tape cassettes.

### SUMMARIES OF THE INVENTION

According to one aspect of the invention, a method of manufacturing leaf springs comprises the steps of :-

(a) feeding strip material of width substantially corresponding to the intended length of the springs in the direction of the longitudinal axis of the strip,

(b) forming slots in the strip which extend inwardly towards each other from the edges of the strip and along lateral axes disposed substantially normal to said longitudinal axis, and

(c) cropping the strip along said lateral axes.

The method of manufacture may also include at least one of the additional steps of :-

1. Forming spring locating holes in the strip,

2. cropping the ends of strip material between the slots,

3. causing strip material between the slots to bend relative to the remainder of the strip material, and/or

4. deforming the strip material so as to strengthen the springs.

The invention also comprises a leaf spring manufactured by the above defined method.

According to a second aspect of the invention we provide a leaf spring comprising a central portion flanked by a pair of laterally-extending outer portions bent relative to the central portion, the edges of the central and outer portions being parallel to each other, the spring being deformed so as to strengthen it.

An embodiment of the invention will now be described, by way of example only, with reference to the accompanying drawings, wherein :-

Figure 1 is a plan view of a manufactured spring,

Figure 2 is a side view of the spring,

Figure 3 is a plan view which illustrates the method of manufacture,

Figure 4 is a plan view of a simplified spring,

Figure 5 is a plan view which illustrates a current method of manufacture, and

Figures 6 and 7 illustrate modifications, corresponding to a sectional view taken on the lines X-X.

Figures 1 and 2 illustrate a manufactured leaf spring 1 for supporting the twin reels of a video tape cassette.

The spring 1, which is of thin (0.20mm to 0.30mm) stainless steel, comprises a flat middle or central portion 2 flanked by a pair of flat laterally-extending outer or arm portions 3. The central portion 2 is pierced by two laterally-spaced holes 4 intended for attachment of the spring 1 to the cover of the tape cassette.

As shown in Figure 2, the outer portions 3 are bent relative to the central portion 2. In addition, the spring 1 is deformed so as to provide concave ribs 5 which strengthen the spring 1 and which allow the use of reduced thickness material. About 25% of a rib 5 is disposed within the central portion 2 and about 75% in the adjacent outer portion 3. A rib 5 comprises, in plan view, two divergent tapered portions.

The edges of the central portion 2 and the edges of the outer portions 3 are parallel. The width of the central portion 2 is greater (by 2.0mm) than that of the outer portions 3, forming shoulders 6.

With reference to Figure 3, a plurality of springs 1 are manufactured by the following steps :-

1. The free end of a coiled strip 10 of thin stainless steel material is fed to a progression press tool 11. The width of the strip 10 substantially corresponds to the intended length of a spring 1. The strip 10 is fed in the direction of the longitudinal axis 12 of the strip, as indicated by arrow 13. The direction of arrow 13 also applies to the direction of grain of the strip. The springs 1 are thus of cross-grained material.

2. Two parallel rows of holes 4 are formed by piercing as the strip 10 progresses, the rows being disposed equi-spaced, on opposite sides of the axis 12.

3. Notches or slots 14 are formed in the strip 10 using cutter blades. The slots 14, (which are 2.00mm in width), extend inwardly towards each other from the edges of the strip 10, along lateral axes 15 disposed substantially normal to the longitudinal axis 12 of the strip.

The worked-on portion of the strip 10 now comprises the basic outlines of the springs 1, each consisting of a central portion 2 flanked by a pair of laterally-extending outer portions 3.

4. The ends of portions 3, which comprise material between the slots 14, are cropped so that these ends become part-circular.

5. The concave ribs 5 are formed by deforming the strip material using a pressing action.

6. The portions 3 are bent relative to associated portions 2.

7. Cropping takes place along lateral axes 15, so as to separate the now-formed springs 1 from the strip material 10.

The steps 2 to 7 are formed simultaneously.

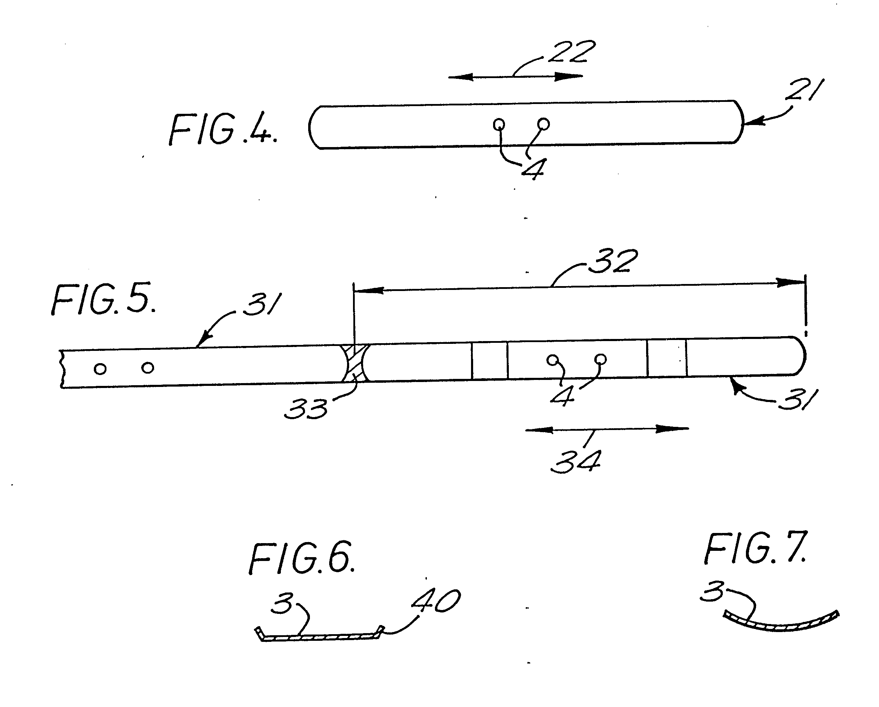

Figure 4 illustrates a simplified spring 21, made according to the invention. Spring 21 is without strengthening ribs 5. Arrow 22 indicates the direction of grain.

Figure 5 illustrates a current method of manufacturing leaf springs (31) from precision cut strip material. Arrow 34 indicates the direction of grain. Note the long feed pitch per press stroke 32 required to form a spring blank. The blanks have subsequently to be cropped at 33 and then formed, i.e. bent.

On the other hand, manufacture of leaf springs according to the invention, which uses a much reduced feed pitch, (indicated by arrow 16 of Figure 2), results in a substantially increased production rate, say 400 springs/minute compared with 180 springs/minute achievable with the method of Figure 5.

It will be appreciated that manufacture according to the invention also allows the use of relatively wide cut strip material which is a substantially cheaper material than the narrow (precision) cut material used in the Figure 5 method.

The holes 4 (see Figure 1) formed in manufacture are used in conjunction with pins (not shown) employed in the press tool 11 for accurate alignment purposes.

Savings of about 20% in production costs per spring 1 are expected by the present invention.

Various modifications may be made. For example :-

(1) The ribs 5 may be replaced by ribs of different plan form, e.g. ribs having substantially parallel sides.

(2) A spring may be strengthened other than by deforming the strip material to produce concave ribs. For example, the longitudinal edges of portions 3 may be formed with flanges 40, as shown in Figure 6. The flanges 40 need not be upstanding as illustrated, but could instead be downwardly extending. Opposite ends of each flange 40 preferably taper to merge with the remainder of the associated portion 3.

(3) As an alternative to (2) above, a spring may be deformed, at least in part, by giving it a concave cross-section, viewed in the direction of its length, as shown in Figure 7.

## Claims

1. A method of manufacturing leaf springs characterised in that it comprises the steps of:

a) feeding strip material (10) of width substantially corresponding to the intended length of the springs (1) in the direction (13) of the longitudinal axis (12) of the strip (10),

b) forming slots (14) in the strip (10) which extend inwardly towards each other from the edges of the strip and along lateral axes (15) disposed substantially normal to said longitudinal axis (12), and

c) cropping the strip along said lateral axes (15).

2. The method of Claim 1, characterised by the additional step of forming spring locating holes (4) in the strip (10).

3. The method of Claim 1 or 2, characterised by the additional step of cropping the ends of strip material (10) between the slots (14).

4. The method of Claims 1, 2 or 3, characterised by the additional step of causing strip material (10) between the slots (14) to bend relative to the remainder of the strip material.

5. The method of any one of Claims 1 to 4, characterised by the additional step of deforming the strip material (5, 40, 45) so as to strengthen the springs.

6. A leaf spring (1) characterised in that it is manufactured according to any one of Claims 1 to 5.

7. A leaf spring characterised in that it comprises a central portion (2) flanked by a pair of laterally-extending outer portions (3) bent relative to the central portion (2), the edges of the central (2) and outer portions (3) being parallel to each other, and that it is deformed (5, 40, 45) so as to strengthen it.

8. A leaf spring as claimed in Claim 7, characterised in that the deformity comprises ribs (5).

9. A leaf spring as claimed in Claim 7, characterised in that the deformity comprises flanges (40) extending along the longitudinal edges of the strip (1).

10. A leaf spring as claimed in Claim 7, characterised in that the deformity comprises giving the spring (1) a concave cross-section (45) along at least part of its length.

FIG.1.

FIG.2.

FIG.3.

FIG.4.

22

21

4

FIG.5.

31

32

33

4

34

31

FIG.6.

3

40

FIG.7.

3

EP 0 369 578 A2